# EUROPÄISCHE PATENTSCHRIFT

(11) **EP 0 678 463 B1**
(45) Veröffentlichungstag und Bekanntmachung des Hinweises auf die Patenterteilung: **30.05.2001**
(21) Anmeldenummer: 95250093.2
(22) Anmeldetag: 18.04.1995
(51) Int. Cl.: B65G 17/32, B65G 39/20

(54) **Kettenförderer**
Chain-conveyor
Transporteur à chaîne

(30) Priorität: 18.04.1994 DE 4414630
(43) Veröffentlichungstag der Anmeldung: 25.10.1995
(73) Patentinhaber: Atecs Mannesmann AG, 40213 Düsseldorf (DE); Bayerische Motoren Werke Aktiengesellschaft, 80788 München (DE)
(72) Erfinder: Kornetzky, Joachim, D-68623 Lampertheim (DE); Schäfer, Klaus, Dipl.-Ing. (FH), D-64285 Darmstadt (DE); Skornia, Christoph, 94405 Landau/Isar (DE)
(74) Vertreter: Presting, Hans-Joachim, Dipl.-Ing.

(56) Entgegenhaltungen:
- DE-A- 3 148 177
- DE-B- 1 042 461
- US-A- 3 805 947
- US-A- 3 857 478

## Beschreibung

Die Erfindung betrifft einen Kettenförderer für Stückgut, insbesondere für Automobilkarosserie-Transportschlitten gemäß dem Oberbegriff des Anspruchs 1.

Es ist allgemein bekannt, siehe beispielsweise Klepzig-Fachberichte 1971, Seite 437 und 438, daß an Ketten für Kettentriebe und für Förderzwecke unterschiedliche Anforderungen gestellt werden. Ketten für Kettentriebe, mit denen eine Antriebskraft unter Beibehaltung oder Veränderung der Übersetzung übertragen wird, weisen zumeist eine kleine Kettenteilung im Bereich von etwa 5 bis 50 mm auf, und die Zahl der Zähne der Umlenkräder liegt zumeist über 10. Förderketten weisen zumeist an den Kettenlaschen zusätzliche Befestigungselemente auf, die direkt oder indirekt für die Förderung herangezogen werden.Die Ketten werden üblicherweise gleitend auf Tragkonstruktionen abgestützt. Um längere, in sich unbewegliche Teile zu schaffen, die durch darauf befestigte Plattformen für den Transport geeignet sind, wird zumeist eine recht grobe Teilung der Kette gewählt. Kettenteilungen bis 500 mm sind üblich. Gleichzeitig werden jedoch die Kettenräder mit kleinen Zähnezahlen unter 10 Zähnen ausgebildet, um die Baugröße klein zu halten. Die Kombination von geringen Zähnezahlen und Ketten mit großer Teilung führt zu dem sogenannten Polygoneffekt. Der Polygoneffekt wird hervorgerufen durch den wechselnden Abstand der in das Umlenkrad einfahrenden Kettenbolzen von einer zu den Kettengliedern parallel und durch den Mittelpunkt des Kettenrades laufenden Mittellinie. Die wechselnden Abstände führen zu schwankenden Kettengeschwindigkeiten und zu einer starken Lärmentwicklung. Die Ungleichförmigkeit der Kettengeschwindigkeit ist letztlich nur abhängig von der Zähnezahl des treibenden Umlenkrades. Bei einer Zähnezahl >10 tritt der Polygoneffekt nur noch abgeschwächt auf.

Aus der DE-31 48 177 A1 ist ein Staurollenkettenförderer mit einer Kette bekannt. Die Kette dieses Förderes weist Tragstücke auf, die als gebremste Staurollen ausgebildet sind. Die Staurollen sind auf den Bolzen der Kette und zwischen deren Laschen gelagert und ragen in Richtung des Transportguts zur Abstützung desselben über die Laschen hinaus. Die Kettenteilung ist so gewählt, daß die Staurollen für den Trennund Staueffekt frei drehbar sind. Das Fördertrum der Kette ist über Laufrollen auf einer zwischen den Umlenkrollen angeordnete Tragkonstruktion abgestützt. Die Laufrollen sind jeweils auf den beidseitig über die Laschen hinaus verlängerten Bolzen gelagert. In Richtung des Transportguts sind die Tragrollen mit an der Tragkonstruktion befestigten Fußleisten überdeckt. Zwischen den gegenüberliegenden Fußleisten verbleibt ein Spalt, der den Durchtritt der Staurollen ermöglicht.

Nachteiligerweise sind die zuvor beschriebenen Ketten und die Staurollenkette gegenüber von oben eindringenden Fremdstoffen wie Schmutz, Staub oder Farbrückständen ungeschützt und somit entsprechend wartungsaufwendig. Die gleitend abgestützten Ketten bieten aufgrund ihrer geringen Breite keine stabile Abstützung des Förderguts, insbesondere wenn die Abstützung über Befestigungslaschen an der Kette erfolgt. Außerdem ist eine Mindestteilung der Staurollenkette erforderlich, um die drehbare Anordnung der Staurollen zu ermöglichen. Mit steigender Teilungsgröße vergrößert sich jedoch der Polygoneffekt der zu einen unruhigen Lauf der Kette führt. Darüber hinaus sind die gebremsten Staurollenketten nicht geeignet, das Transportgut lagegenau zu führen.

Aus der Patentschrift US 3,857,478 ist eine gattungsgemäße Kettenförderbahn für schwere Container bekannt. Diese Kettenförderbahn besteht im Wesentlichen aus mindestens zwei Kettenförderern, die in Förderrichtung gesehen parallel nebeneinander und mit Abstand zueinander verlaufen sowie jeweils eine endlos umlaufende Kette aufweisen. Die Kette wird jeweils über am Anfang und am Ende der Kettenförderer angeordnete Umlenkräder geführt. In Förderrichtung gesehen zwischen den Umlenkrädern eines Kettenförderers sowie in Förderrichtung verlaufend ist jeweils eine Tragkonstruktion angeordnet, von der das Obertrum der Kette gestützt wird. Somit können auf dem Obertrum der Kette die Container transportiert werden. Bezüglich der Ausbildung der Ketten sind in dieser Patentschrift zwei Ausführungsbeispiele beschrieben.

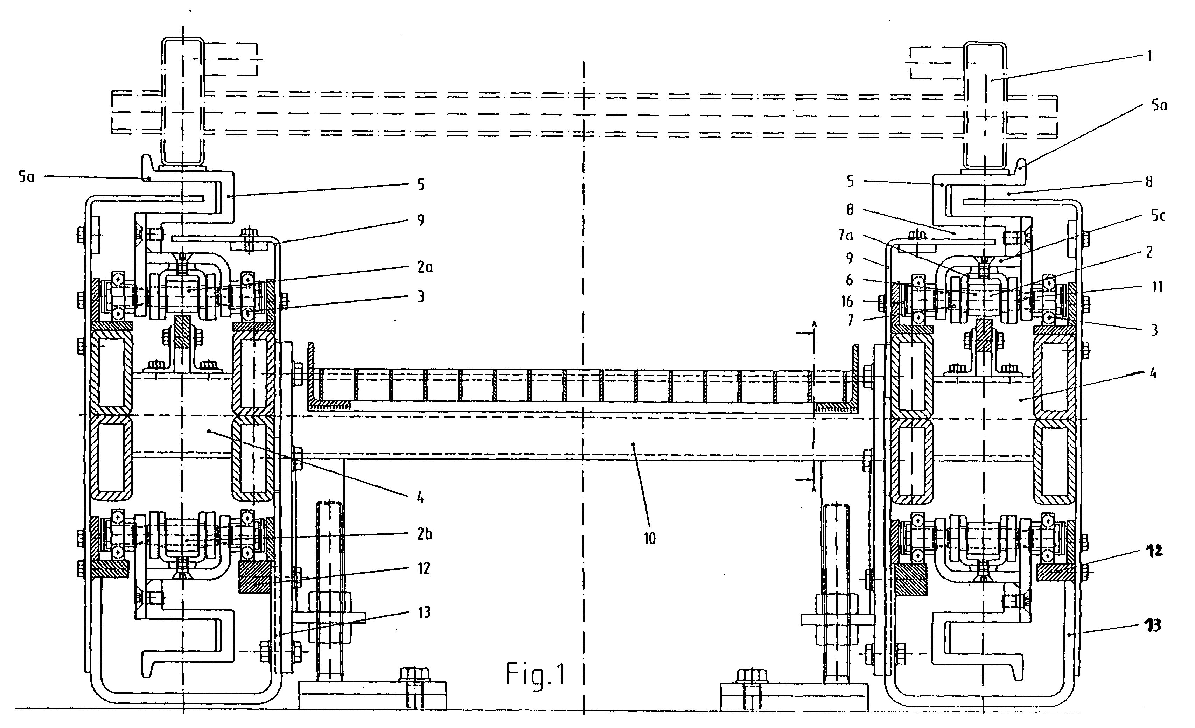

Das eine Ausführungsbeispiel gemäß den Figuren 1 bis 3 zeigt Kettenförderer mit einer als Rollenkette ausgebildeten Kette. Diese Rollenkette zeichnet sich dadurch aus, dass auf den Bolzen zwischen den Kettenlaschen Laufrollen gelagert sind, die zumindest in Richtung der Tragkonstruktion nach unten über die Kettenlaschen hinausragen. Hierdurch ist eine rollende Abtragung der Kette auf der Tragkonstruktion möglich. Desweiteren ist die Kette als Zweifach-Kette ausgebildet, wobei die äußeren Kettenlaschen jeweils eine verlängerte und nach oben gerichtete Befestigungslasche aufweisen, an die ein Tragstück zur Aufnahme der Container angeschraubt ist. An jeder zweiten Kettenlasche ist ein Tragstück befestigt, so dass nach Art einer Gliederkette eine nahezu durchgehende Förderfläche für die Container geschaffen wird.

Der vorliegenden Erfindung liegt die Aufgabe zugrunde, einen Kettenförderer zu schaffen, der bei ortsfest auf der Kette ruhendem Stückgut die Gleichförmigkeit der Förderbewegung verbessert.

Diese Aufgabe wird durch die im Anspruch 1 aufgeführten Merkmale gelöst. Vorteilhafte Ausgestaltungen der Erfindung sind in den Unteransprüchen 2 bis 10 angegeben.

Erfindungsgemäß wird durch die feststehende Anordnung der Tragstücke an der Kette und deren Abstützung über Laufrollen erzielt, daß gegenüber einem Transport auf Staurollen oder direkt auf der Kette das Stückgut lagegenau und stabil befördert werden kann. Des weiteren können die Tragstücke mit ihren Aufnahmeflächen an das Stückgut angepaßt werden und somit zu einem sicheren Transport beitragen. Besonders vorteilhaft ist die Anordnung von Laufrollen an den Tragstücken, da hierdurch die Stützkräfte durch die Aufnahme des Stückgutes direkt von dem Tragstück in die Tragkonstruktion des Kettenförderers abgeleitet werden. Die Lebensdauer der Kette wird dadurch erhöht, da diese nur noch eine reine Antriebs- und keine Tragfunktion mehr hat. Um die Antriebskraft der Kette auf die Tragstücke zu übertragen, sind diese mit einer speziell ausgebildeten Lasche der Kette verbunden. Eine besonders stabile Abstützung des Stückgutes über die Tragstücke wird erreicht durch die Anordnung von je vier Laufrollen je Tragstück nach Art eines Laufwagens. Die Abstützung des Stückguts wird optimiert, wenn der Abstand der vorderen zur hinteren Achse der Laufrollen des Laufwagens einen Abstand aufweist, der größer ist als die Teilung der Kette. Bei Verwendung einer 2-Zoll-Kette hat sich ein Abstand von 100 mm als vorteilhaft erwiesen.

In einer weiteren Ausgestaltung ist vorgesehen, daß die Kettenbolzen beidseitig über die Laschen der Ketten hinaus verlängert sind und die Laufrollen sowie die Tragstücke auf dem Kettenbolzen gelagert sind. Vorteilhafterweise kann bei dieser Ausführungsform auf eine gesonderte Befestigung des Tragstücks an der Kette verzichtet werden, jedoch wird der Abstand der Laufrollenachsen durch die Kettenteilung bestimmt.

Besonders vorteilhaft ist die spezielle Ausbildung der Tragstücke aus einem Anschlußelement zur Verbindung des Tragstückes mit der Kette, einem Auflageelement zur Aufnahme des Stückguts und einen zwischen dem Anschlußelement und dem Auflageelement angeordneten Verbindungsteil, das derart ausgebildet ist, daß im Zusammenwirken mit einer an der Tragkonstruktion angeordneten Abdeckung die Kette in Richtung des Stückguts labyrinthartig überdeckbar ist. Hierdurch wird erreicht, daß herabfallende Schmutzstoffe, wie zum Beispiel Sprühnebel, Lackreste, nicht so leicht zur Kette vordringen können. Die Wartungs- und Reinigungsintervalle des Kettenförderers bzw. der Kette können somit verlängert werden. Die lösbare Befestigung der Abdeckungen für die Kette ermöglicht eine leichte Kettenwartung bzw. deren Wechsel.

Auch als vorteilhaft erweist sich die Verwendung von Ketten mit einer Teilung unter 3 Zoll, vorzugsweise 2 Zoll, wobei die Kettenräder etwa 250 mm Durchmesser aufweisen und ca. 15 Zähne vorhanden sind, da hierdurch der bekannte Polygoneffekt minimiert wird. Ein derartig ausgebildeter Kettenförderer in Verbindung mit den als Laufwagen ausgebildeten Tragstücken eignet sich bevorzugt für den Transport von Automobilkarosserie-Transportschlitten, die durch eine Lackieranlage gefördert werden. Die gleichmäßige Fördergeschwindigkeit und stabile und lagegenaue Abstützung der Transportschlitten führt zu einer direkten Verbesserung des Lackierergebnisses.

Die Erfindung wird nachfolgend anhand von zwei in Zeichnungen dargestellten Ausführungsbeispielen näher beschrieben. Es zeigen:
- Figur 1: einen Querschnitt eines Kettenförderers in einer ersten Ausführungsform,
- Figur 2: eine Seitenansicht eines Kettenabschnitts mit einem Tragstück des Kettenförderers gemäß Figur 1,
- Figur 3: eine Draufsicht auf das Tragstück gemäß Figur 2,
- Figur 4: einen Querschnitt eines Kettenförderers in einer weiteren Ausführungsform und
- Figur 5: eine Seitenansicht eines Kettenabschnitts mit einem Tragstück des Kettenförderers gemäß Figur 4.

Die Figur 1 zeigt einen Kettenförderer für Stückgut 1, wie zum Beispiel Autokarosserie-Transportschlitten, die kontinuierlich durch eine Lackieranlage gefördert werden. Der Kettenförderer weist zwei parallel zueinander verlaufende Ketten 2 auf, die über Laufrollen 3 auf einer Tragkonstruktion 4 abgestützt werden. Die Tragkonstruktion 4 ist zwischen nicht dargestellten Umlenkrädem für die endlose Kette 2 angeordnet und verläuft in Förderrichtung F. Mit der Kette 2 verbunden sind Tragstücke 5, die bei horizontal verlaufender Förderrichtung senkrecht nach oben aus der Kette 2 heraus in Richtung des zu transportierenden Stückguts 1 ragen. Jedes Tragstück 5 besteht im wesentlichen aus einem flachen und horizontal ausgerichteten Auflageelement 5a für das Stückgut 1, einem Anschlußelement 5c zur Verbindung des Tragstücks 5 mit der Kette 2 und einem Verbindungsteil 5b, welches zwischem dem Auflageelement 5a und dem Anschlußelement 5c angeordnet ist. Das Anschlußelement 5c ist im wesentlichen U-förmig ausgebildet und umgreift die Kette 2, in dem Bereich, in dem sie als Last-bzw. Obertrum 2a dient, von oben und ist über eine Verschraubung mit einer ebenfalls U-förmig ausgebildeten Lasche 7 der Kette 2 verbunden. Die beidseitig seitlich und mit Abstand neben der Kette 2 herunterragenden Enden der Schenkel des Anschlußelements 5c dienen zur Lagerung der Laufrollen 3 über deren Laufachsen 11. In dem Bereich des Obertrums 2a, in dem die Kette 2 im wesentlichen horizontal auf der Tragkonstruktion 4 abläuft, ist die Lagerung der Laufrollen 3 so gewählt, daß die Laufachsen 11 in einer horizontalen Ebene mit den Ketten bolzen 6 angeordnet sind. An dem Anschlußelement 5c ist das Verbindungsteil 5b befestigt. Der erste Abschnitt des Verbindungsteils 5b ist in Förderrichtung F gesehen L-förmig, dessen kurzer Schenkel an einem seitlichen Ende des Anschlußelements 5c befestigt ist, so daß ein seitlich offener im wesentlichen U-förmiger Raum 8 entsteht. An diesen ersten L-förmigen Abschnitt des Verbindungsteils 5b schließt sich ein weiterer L-förmiger Abschnitt an, wobei der kurze Schenkel des L-förmigen Abschnittes des Verbindungsteils 5b an dem Ende des ersten L-förmigen Abschnittes befestigt ist und der lange Schenkel des L-förmigen Abschnittes durch das flache Auflageelement 5a gebildet wird. Durch diese Anordnung des Auflageelementes 5a und des Verbindungsteils 5b entsteht wiederum ein quer zur Förderrichtung seitlich offener Raum 8, dessen offene Seite der offenen Seite des ersten Raums 8 gegenüberliegend angeordnet ist. Um ein Herabfallen von Schmutzstoffen, wie zum Beispiel Sprühnebel und Farbresten auf die Kette 2 zu verhindern, sind an der Tragkonstruktion 4 Abdeckungen 9 angeordnet. Diese Abdeckungen 9 begrenzen die Kette 2 mit ihren Laufrollen 3 jeweils seitlich und werden im Bereich des Tragstückes 5 derart abgewinkelt, daß die freien Enden der Abdeckungen 9 in die seitlich offenen Räume 8 mit Abstand hineinragen. Durch die spezielle Ausbildung mit den L-förmigen Abschnitten des Verbindungsteils 5b und der Abwinkelung der Abdeckung 9 wird eine Überdeckung der Kette 2 in Richtung des Stückgutes 1 nach Art einer Labyrinthdichtung geschaffen.

Des weiteren ist der Figur 1 zu entnehmen, daß das rücklaufende Untertrum 2b der Kette 2 über die Laufrollen 3 an einer Führungsschiene 12 abrollen. Die Führungsschienen 12 sind an den Innenseiten eines Gehäuses 13 angeordnet, das den Untertrum 2b umschließt und an der Tragkonstruktion 4 aufgehängt ist. Die Tragkonstruktionen 4 der beiden Ketten 2 sind jeweils über Querträger 10 miteinander verbunden, die den Kettenförderer auf dem Hallenboden verankern.

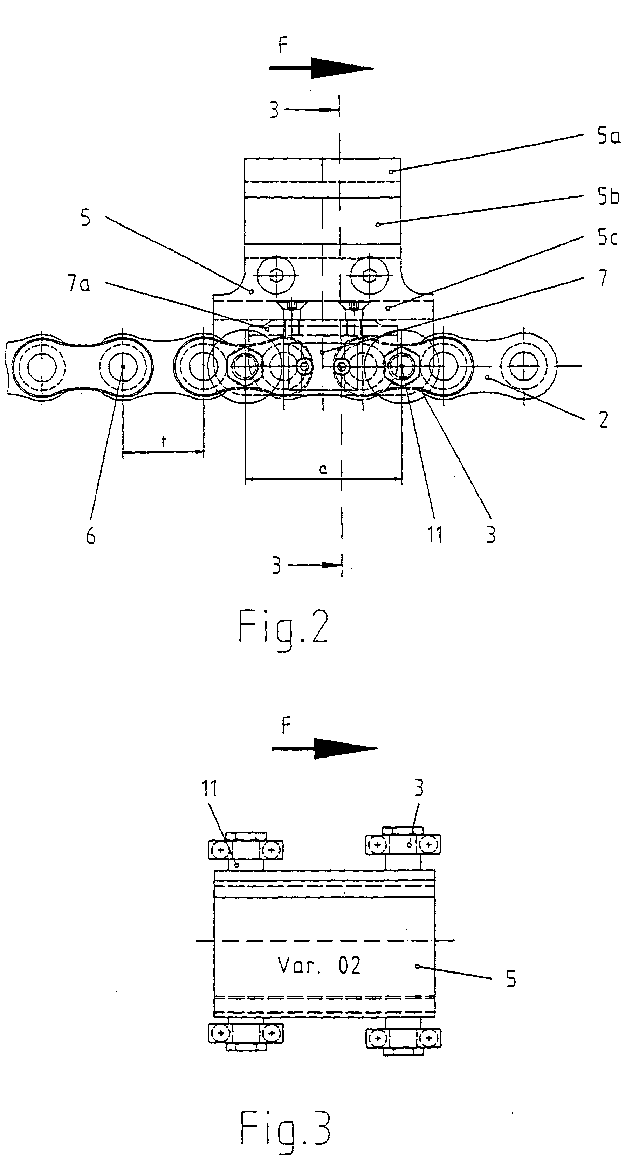

In Figur 2 ist eine Seitenansicht eines Kettenabschnittes mit einem Tragstück 5 eines Kettenförderers gemäß der Figur 1 dargestellt. Das Tragstück 5 ist über eine Verschraubung mit einer Lasche 7 der Kette 2 verbunden. Die Lasche 7 weist hierzu gegenüber den übrigen Kettenlaschen ein flaches Anschlußteil 7a auf, das die beidseitigen Laschen 7 oberhalb der Kette miteinander verbindet, so daß insgesamt eine U-förmige Lasche 7 entsteht. Das Tragstück 5 ist an den Schenkeln seines U-förmigen Anschlußelements 5c mit Laufrollen 3 versehen. Je Tragstück 5 sind jeweils vier Laufrollen 3 vorgesehen, wovon jeweils zwei auf einer Seite der Kette 2 angeordnet sind. Die Laufrollen 3 sind mit ihren Laufachsen 11 in Förderrichtung F gesehen hintereinander angeordnet und haben in Förderrichtung F gesehen einen Abstand a untereinander. Dieser Abstand a ist betragsmäßig doppelt so groß wie die Teilung t der Kette 2.

Die Figur 3 zeigt eine Draufsicht auf ein Tragstück 5 eines Kettenförderers gemäß Figur 1. Das Tragstück 5 ist als Laufwagen mit vier Laufrollen 3 ausgebildet.

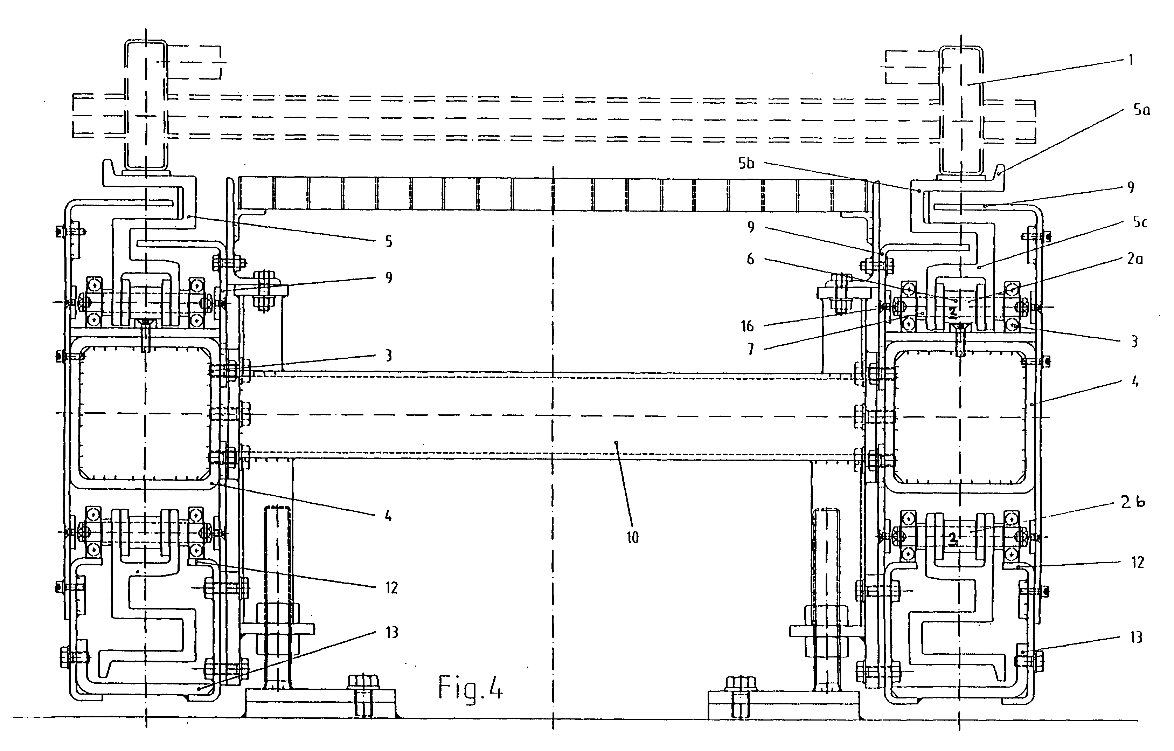

In Figur 4 ist ein weiteres Ausführungsbeispiel eines erfindungsgemäßen Kettenförderers gezeigt. Dieser Kettenförderer unterscheidet sich gegenüber dem Ausführungsbeispiel gemäß den Figuren 1 bis 3 in der Befestigung des Tragstückes 5 an der Kette 2 und der Lagerung der Laufrollen 3. In dieser Ausführung sind die Laufrollen 3 auf den Kettenbolzen 6, die beidseitig über die Laschen 7 hinaus verlängert sind, gelagert. Die verlängerten Kettenbolzen 6 dienen auch zur Lagerung der Tragstücke 5, die im Bereich ihres Anschlußelementes 5c mit entsprechenden Bohrungen versehen sind.

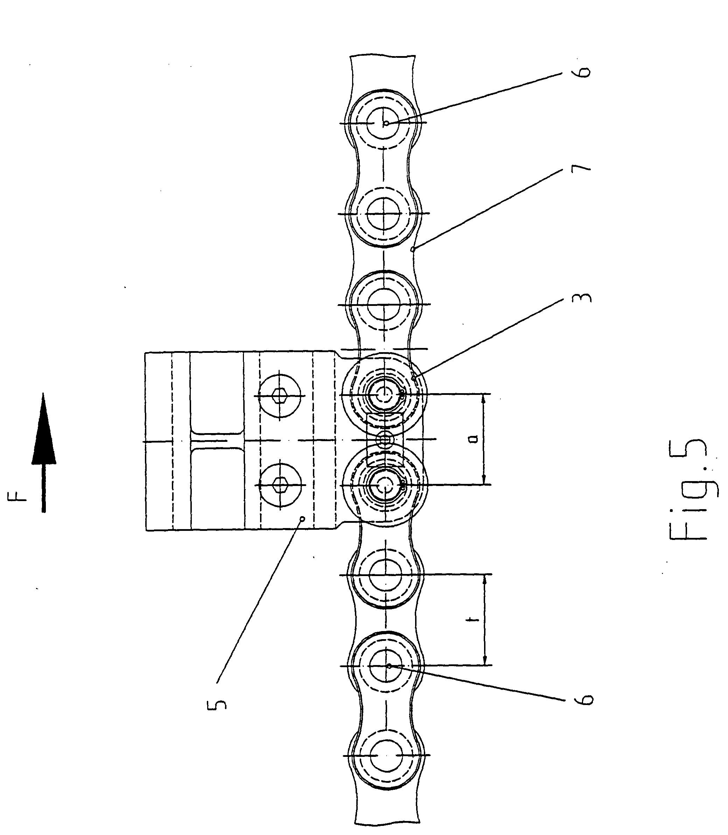

Der Figur 5, die eine Seitenansicht eines Kettenabschnittes mit einem Tragstück 5 eines Kettenförderers gemäß Figur 4 zeigt, ist zu entnehmen, daß jedes Tragstück 5 jeweils an zwei in Förderrichtung F gesehen benachbarten Kettenbolzen 6 gelagert ist.

In beiden Ausführungsformen (s. Figur 1 und 4) der Kettenförderer kommt eine Kette 2 mit einer Teilung t unter 3 Zoll, vorzugsweise 2 Zoll, zum Einsatz. Die Umlenkrollen weisen einen Durchmesser von etwa 250 mm auf und haben etwa 15 Zähne. Hierdurch ist gewährleistet, daß das Stückgut, d.h. die Autokarosserie-Transportschlitten ruckfrei gefördert werden können. Zur seitlichen Führung der Kette 2 sind die Enden der Kettenbolzen 6 bzw. der Laufachsen 11 jeweils mit Kunststoffkappen 16 versehen, die von der inneren Wand der Abdeckung 9 geführt werden. Zur Führung der Kette 2 können auch Kunststoffelemente an den Seiten der Kettenlaschen 7 vorgesehen werden.

## Patentansprüche

1. Kettenförderer für Stückgut, insbesondere für Automobilkarosserie-Transportschlitten, mit endlos über Umlenkräder und parallel zueinander geführten Ketten, mit an den Ketten feststehend befestigten Tragstücken zur Aufnahme des Stückgutes, wobei
die Tragstücke (5) über die Ketten (2) in Richtung des Stückgutes (1) hinausragen und über Laufrollen (3) an einer in Förderrichtung verlaufenden und zwischen den Umlenkrollen angeordneten Tragkonstruktion abgestützt sind, wobei die Laufrollen (3) an den Tragstücken (5) gelagert sind,
dadurch gekennzeichnet,
daß die Laufrollen (3) beidseitig und jeweils seitlich neben der Kette (2) angeordnet sind.

2. Kettenförderer nach Anspruch 1,
dadurch gekennzeichnet,
daß die Tragstücke (5) jeweils an einer Lasche (7) der Kette (2) befestigt sind.

3. Kettenförderer nach Anspruch 1 oder 2,
dadurch gekennzeichnet,
daß an jedem Tragstück (5) vier Laufrollen (3) angeordnet sind, von denen zwei jeweils auf den gegenüberliegenden Seiten neben der Kette (2) und in Förderrichtung (F) gesehen hintereinander angeordnet sind.

4. Kettenförderer nach einem oder mehreren der Ansprüche 1 bis 3,
dadurch gekennzeichnet,
daß die Laufrollen (3) an einem Tragstück (5) in Förderrichtung (F) mit ihren Laufachsen (11) einem Abstand (a) aufweisen, der größer ist als die Teilung (t) der Kette (2).

5. Kettenförderer nach Anspruch 4,
dadurch gekennzeichnet,
daß der Abstand (a) größer als die Teilung (t) und kleiner als der vierfache Betrag der Teilung (t) ist.

6. Kettenförderer nach Anspruch 5,
dadurch gekennzeichnet,
daß der Abstand (a) etwa dem Betrag der doppelten Teilung entspricht.

7. Kettenförderer nach Anspruch 1,
dadurch gekennzeichnet,
daß die Kettenbolzen (6) beidseitig über die Laschen (7) der Ketten (2) hinaus verlängert sind und die Laufrollen (3) auf dem Kettenbolzen (6) gelagert sind.

8. Kettenförderer nach einem der Ansprüche 1 bis 7,
dadurch gekennzeichnet,
daß die Tragstücke (5) im wesentlichen aus einem Anschlußelement (5c) zur Verbindung mit der Kette (2), einem Auflageelement (5a) zur Aufnahme des Stückguts (1) und einem dazwischen angeordneten Verbindungsteil (5b) bestehen, das derart ausgebildet ist; daß im Zusammenwirken mit einer an der Tragkonstruktion (4) angeordneten Abdeckung (9) die Kette (2) in Richtung des Stückguts (1) labyrinthartig überdeckbar ist.

9. Kettenförderer nach Anspruch 8,
dadurch gekennzeichnet,
daß das Verbindungsteil (5b) die zueinander parallelen Flächen des Anschlußelements (5c) und des Auflageelements (5a) derart miteinander verbindet, daß zwei in Förderrichtung (F) gesehen übereinander liegende Räume (8) vorhanden sind, die in verschiedene Richtungen und quer zur Förderrichtung (F) offen sind und in diese Räume (8) die Abdeckungen (9) unter Beibehaltung eines Abstandes hineinragen.

10. Kettenförderer nach einem der Ansprüche 8 oder 9,
dadurch gekennzeichnet,
daß die Abdeckungen (9) lösbar befestigt sind.

## Claims

1. Chain conveyor for individual articles, in particular for car body skids, with chains which are continuously guided parallel to one another over deflection pulleys, and with bearing pieces, which are fastened in a fixed manner to the chains, for holding the individual articles, wherein the bearing pieces (5) project beyond the chains (2) in the direction of the individual articles (1) and are supported via idler rollers (3) at a bearing structure extending in the conveying direction and disposed between the deflection pulleys,
wherein the idler rollers (3) are mounted at the bearing pieces (5),
characterised in that the idler rollers (3) are disposed on both sides and in each case to the side of the chain (2).

2. Chain conveyor according to Claim 1,
characterised in that the bearing pieces (5) are each fastened to a link plate (7) of the chain (2).

3. Chain conveyor according to Claim 1 or 2,
characterised in that four idler rollers (3) are disposed at each bearing piece (5), two of which are in each case disposed on opposite sides next to the chain (2) and, viewed in the conveying direction (F), one behind the other.

4. Chain conveyor according to one or more of Claims 1 to 3,
characterised in that the idler rollers (3) are disposed with their carrying shafts (11) at a bearing piece (5) in the conveying direction (F) at a spacing (a) which is greater than the pitch (t) of the chain (2).

5. Chain conveyor according to Claim 4,
characterised in that the spacing (a) is greater than the pitch (t) and smaller than four times the magnitude of the pitch (t).

6. Chain conveyor according to Claim 5,
characterised in that the spacing (a) corresponds approximately to the magnitude of twice the pitch.

7. Chain conveyor according to Claim 1,
characterised in that the chain pins (6) extend beyond the link plates (7) of the chains (2) on both sides, and the idler rollers (3) are mounted on the chain pins (6).

8. Chain conveyor according to any one of Claims 1 to 7,
characterised in that the bearing pieces (5) consist essentially of an attachment element (5c) for connection to the chain (2), a support element (5a) for holding the individual articles (1), and a connection part (5b) which is disposed in between and formed such that, in co-operation with a cover (9) disposed at the bearing structure (4), the chain (2) is covered in labyrinth fashion in the direction of the individual articles (1).

9. Chain conveyor according to Claim 8,
characterised in that the connection part (5b) connects together the mutually parallel faces of the attachment element (5c) and the support element (5a) such that two spaces (8) are provided which, viewed in the conveying direction (F), lie one above the other and are open in different directions and transversely to the conveying direction (F), and the covers (9) project into these spaces (8) while maintaining a spacing.

10. Chain conveyor according to either of Claims 8 and 9,
characterised in that the covers (9) are secured in a detachable manner.

## Revendications

1. Transporteur à chaînes pour des produits, en particulier pour des chariots de transport de carrosseries d'automobiles, comportant des chaînes guidées sans fin par l'intermédiaire de roues de renvoi et parallèlement l'une à l'autre, des pièces de support fixées rigidement aux chaînes pour recevoir les produits, les pièces de support (5) faisant saillie au-dessus des chaînes (2) en direction des produits (1) et s'appuyant par l'intermédiaire de rouleaux de roulement (3) sur une construction de support s'étendant dans la direction de transport et agencée entre les rouleaux de renvoi, les rouleaux de roulement (3) étant montés sur les pièces de support (5),
caractérisé en ce que les rouleaux de roulement (3) sont agencés des deux côtés et, à chaque fois, latéralement à côté de la chaîne (2).

2. Transporteur à chaînes selon la revendication 1,
caractérisé en ce que les pièces de support (5) sont fixées à chaque fois sur un maillon (7) de la chaîne (2).

3. Transporteur à chaînes selon la revendication 1 ou 2,
caractérisé en ce que, sur chaque pièce de support (5), sont agencés quatre rouleaux de roulement (3), desquels, à chaque fois, deux sont agencés sur les côtés opposés à côté de la chaîne (2) et dans la direction de transport (F), l'un derrière l'autre.

4. Transporteur à chaînes selon une ou plusieurs des revendications 1 à 3,
caractérisé en ce que les rouleaux de roulement (3) présentent sur une pièce de support (5) dans la direction de transport (F), avec leurs axes de roulement (11), un écartement (a) qui est plus grand que le pas (t) de la chaîne (2).

5. Transporteur à chaînes selon la revendication 4,
caractérisé en ce que l'écartement (a) est plus grand que le pas (t) et inférieur à quatre fois la valeur du pas (t).

6. Transporteur à chaînes selon la revendication 5,
caractérisé en ce que l'écartement (a) correspond sensiblement à une valeur double du pas.

7. Transporteur à chaînes selon la revendication 1,
caractérisé en ce que les tourillons de chaîne (6) se prolongent, des deux côtés, au-delà des maillons (7) des chaînes (2), et les rouleaux de roulement (3) sont montés sur le tourillon de chaîne (6).

8. Transporteur à chaînes selon une des revendications 1 à 7,
caractérisé en ce que les pièces de support (5) sont constituées généralement d'un élément de raccordement (5c) pour la liaison à la chaîne (2), d'un élément de support (5a) pour recevoir les produits (1), et d'une partie de liaison (5b) agencée entre eux, qui est réalisée de sorte que, en coopération avec un recouvrement (9) agencé sur la construction de support (4), la chaîne (2) peut être recouverte à la manière d'un labyrinthe en direction des produits (1).

9. Transporteur à chaînes selon la revendication 8,
caractérisé en ce que la partie de liaison (5b) relie ensemble les surfaces parallèles l'une à l'autre de l'élément de raccordement (5c) et de l'élément de support (5a), de sorte que deux espaces (8) superposés dans la direction de transport (F) sont présents, qui sont ouverts dans différentes directions et transversalement à la direction de transport (F) et, dans ces espaces (8), les recouvrements (9) pénètrent en conservant un écartement.

10. Transporteur à chaînes selon une des revendications 8 ou 9,
caractérisé en ce que les recouvrements (9) sont fixés de façon amovible.
